Europäisches Patentamt

European Patent Office

Office européen des brevets

(11) Veröffentlichungsnummer: **0 294 771**

**A2**

# (12) EUROPÄISCHE PATENTANMELDUNG

(21) Anmeldenummer: **88109081.5**

(22) Anmeldetag: **08.06.88**

(51) Int. Cl.⁴: **C08L 67/06 , C08F 283/01 , C08L 25/10**

(30) Priorität: **12.06.87 DE 3719634**

(43) Veröffentlichungstag der Anmeldung:
**14.12.88 Patentblatt 88/50**

(84) Benannte Vertragsstaaten:
**DE FR GB IT**

(71) Anmelder: **BASF Aktiengesellschaft**
**Carl-Bosch-Strasse 38**
**D-6700 Ludwigshafen(DE)**

(72) Erfinder: **Holoch, Jan, Dr.**
**Koenigsberger Strasse 22 a**
**D-6906 Leimen(DE)**
Erfinder: **Schwaben, Hans-Dieter, Dr.**
**Lindenstrasse 3**
**D-6721 Freisbach(DE)**
Erfinder: **Lawonn, Horst**
**Stettiner Strasse 6**
**D-6703 Limburgerhof(DE)**

(54) **Hochfüllbare LS-UP-Harzformmasse mit guter Pigmentierbarkeit.**

(57) Die Erfindung betrifft ungesättigte Polyesterformmassen, die als LS-Komponente ein schlagfest modifiziertes Polystyrol enthalten, bei dem der mittlere Teilchendurchmesser ($d_{50}$-Wert) der Weichkomponente zwischen 0,5 und 1,5 $\mu$m beträgt. Die Formmassen können im Vergleich zu Polyesterformmassen, die herkömmliche LS-Komponenten enthalten, höher gefüllt werden.

EP 0 294 771 A2

## Hochfüllbare LS-UP-Harzformmasse mit guter Pigmentierbarkeit

Die Erfindung betrifft Formmassen aus ungesättigten Polyesterharzen und einem schlagfest modifizierten Polystyrol, die nach der Aushärtung Formteile mit geringem Schrumpf ergeben.

Ein wichtiges Einsatzgebiet ungesättigter Polyesterharze sind SMC- und BMC-Formulierungen. SMC (sheet molding compound)-Massen sind flächige Halbzeuge aus glasfaserverstärkten, gefüllten Polyesterharzen, die in einer Presse verformt und gehärtet werden. BMC (bulk molding compound)-Massen sind mit Füllstoffen und Kurzfasern verstärkte Polyesterharze, die durch Spritzguß verarbeitet werden. Zur Herstellung solcher Massen wird das Harz mit einem Thermoplast als Antischrumpfkomponente, Glasfasern, Füllstoffen und einem Erdalkalioxid oder -hydroxid als Eindickmittel abgemischt.

Je nach Güte der Schrumpfkompensation unterscheidet man zwischen LS (Low shrink)-Systemen und LP (Low profile)-Systemen. Die vorliegende Erfindung betrifft LS-Systeme. Dabei wird als LS-Komponente üblicherweise Polystyrol zugesetzt, das auch mit einem Kautschuk schlagfest modifiziert sein kann (s. z. B. K. Demmler, E.Müller, Kunststoffe 66(1976), Seite 781).

Zur Herstellung der Formmassen werden ungesättigte Polyester, Polystyrol, Verstärkungsfasern, Füllstoffe sowie die weiteren Additive vermischt. Für den Formmassenhersteller ist eine möglichst niedrige Viskosität wichtig, um einen hohen Anteil an funktionellen Füllstoffen (z.B. Aluminiumoxidhydrat zur Flammschutzausrüstung) einarbeiten zu können. Ab einem bestimmten Füllgrad wird jedoch die Verarbeitungsviskosität so hoch, daß Probleme bei der Fasertränkung und der homogenen Verteilung eines eventuell vorhandenen Pigments auftreten.

Schlagfest modifiziertes Polystyrol besitzt üblicherweise eine Weichphase mit einem mittleren Teilchendurchmesser (Volumenmittel) - d50-Wert -zwischen 2 und 5 Mikrometer und eine Hartmatrix mit einem Viskositätsmittel des Molekulargewichts zwischen 140 und 200 kg/mol.

Überraschenderweise wurde nun gefunden, daß eine LS-Harzformmasse höher gefüllt werden kann, wenn ein schlagfest modifiziertes Polystyrol verwendet wird, dessen d50-Wert zwischen 0,5 und 1,5, bevorzugt zwischen 0,7 und 1,2 Mikrometer liegt, und bei dem vorzugsweise das Viskositätsmittel des Molekulargewichts der Hartmatrix zwischen 100 und 150 kg/mol beträgt. Bei gleichem Füllgrad werden, verglichen mit einer Standard-LS-Formmasse, bis zu 30 % geringere Viskositäten gemessen. Ein Nebeneffekt der geringeren Viskosität ist die gleichmäßigere Pigmentierbarkeit der Formmasse.

Gegenstand der Erfindung sind demzufolge härtbare Formmassen aus:

A) einem ungesättigten Polyester

B) 5 bis 50 Gew.-%, bezogen auf A, eines schlagfest modifizierten Polystyrols,

C) 30 bis 150 Gew.-%, bezogen auf A, einer mit A copolymerisierbaren Verbindung,

D) 0-60 Gew.-%, bezogen auf A + B + C, eines faserförmigen Verstärkungsmaterials,

E) 0-300 Gew.-%, bezogen auf A + B + C, eines Füllstoffs,

F) 0,005-0,5 Gew.-%, bezogen auf A + B + C, eines Inhibitors,

G) 0,1-5 Gew.-%, bezogen auf A + B + C, eines Initiators,

H) 0,2-5 Gew.-%, bezogen auf A + B + C, eines Eindickmittels,

I) gegebenenfalls weiteren üblichen Zusatzstoffen, wobei die Komponente B aus einer Hart- und einer Weichphase auf Basis eines Butadienpolymerisats besteht, der Anteil der Weichphase, bezogen auf die Summe aus Hart- und Weichphase, zwischen 27 und 33 Gew.-% liegt, die Weichphase gleichmäßig in der Hartmatrix in Form diskreter Teilchen dispergiert ist, und der mittlere Teilchendurchmesser (Volumenmittel) -d50-Wert - der Weichphase zwischen 0,5 und 1,5 Mikrometer beträgt.

Zu den Komponenten ist folgendes zu sagen:

A) Als ungesättigte Polyester A eignen sich die üblichen Kondensationsprodukte aus mehrwertigen, insbesondere zweiwertigen Carbonsäuren und deren veresterbaren Derivaten, insbesondere deren Anhydride, die mit mehrwertigen, insbesondere zweiwertigen Alkoholen esterartig verknüpft sind, und gegebenenfalls zusätzlich Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.

Als Alkoholkomponenten eignen sich z.B. Ethylenglykol, Propylenglykol-1,2, Propandiol-1,3, Butandiol-1,3, Butandiol-1,4, Hexandiol-1,6, Hexantriol-1,2,6, Neopentylglykol, Diethylenglykol, Triethylenglykol, Dipropylenglykol, Cyclohexandiol-1,2, hydriertes Bisphenol A, Cyclohexandimethanol, ethoxyliertes Bisphenol A sowie Dihydroxymethyltricyclodecan, Trimethylolpropan, Glycerin und Pentaerythrit.

Geeignete Carbonsäuren bzw. deren Derivate sind zweibasische olefinisch ungesättigte Carbonsäuren, wie z.B. Maleinsäure, Fumarsäure, Chlormaleinsäure, Itaconsäure, Citraconsäure, Methylenglutarsäure und Mesaconsäure bzw. deren Ester oder vorzugsweise deren Anhydride. In die Polyester können andere modifizierend wirkende zweibasische, ungesättigte und/oder gesättigte, sowie aromatische Carbonsäuren

2

eingebaut werden, z.B. Bernsteinsäure, Glutarsäure, Adipinsäure, Sebacinsäure, Phthalsäureanhydrid, o-Phthalsäure, Isophthalsäure, Terephthalsäure, Tetrahydrophthalsäure und Endomethylentetrahydrophthalsäure.

B) Die Herstellung der Komponente B erfolgt durch eine an sich bekannte radikalische Polymerisation von Styrol in Gegenwart einer gelösten Kautschukkomponente auf Basis eines Butadienpolymerisats. Die Polymerisation kann entweder thermisch, d.h. durch Erhöhung der Temperatur, oder durch die Zugabe von in Radikale zerfallende Initiatoren, bevorzugt organischen Peroxiden, gestartet werden. Die Polymerisation kann kontinuierlich, beschrieben z.B. in DE-AB 26 13 352, durchgeführt werden.

Als Kautschukkomponente werden bevorzugt über eine anionische Polymerisation hergestellte Polybutadiene mit einer Viskositätszahl (0,5 %ig in Toluol) von 280 bis 380 ml/g verwendet. Auch Copolymerisate des Butadiens, z.B. mit Styrol sind geeignet, insbesondere Blockcopolymerisate.

Bei der Herstellung der Komponente B können weitere Komponenten, wie z.B. das Molekulargewicht der Hartmatrix regelnde Verbindungen, wie Mercaptane, Mineralöle oder Stabilisatoren in wirksamen, dem Fachmann wohl bekannten Mengen anwesend sein.

Die Bestimmung der Teilchengröße der Weichphase erfolgt mittels eines bildanalytischen Verfahrens, wie es z.B. in DE-A-37 00 332 beschrieben ist. Das Viskositätsmittel des Molekulargewichts wird über die Mark-Houwink- Gleichung bestimmt (Kunststoffhandbuch, Band V, "Polystyrol", Carl Hanser-Verlag, München, 1969, S. 394, Gleichung 5). Die darin benötigte Grenzviskosität erhält man über Messung der Viskositätszahlung (DIN 53 724) unter Verwendung der Schulz-Blaschke-Gleichung (B. Vollmert, Grundriß der Makromolekularen Chemie, Band III, E. Vollmert-Verlag, Karlsruhe, 1982, S. 66, Gleichung 64).

Die Komponente B ist in der Formmasse in Mengen von 5 bis 50, vorzugsweise 15 bis 40 Gew.-%, bezogen auf A, enthalten.

C) Als copolymerisierbare, ethylenisch ungesättigte monomere Verbindungen kommen die üblicherweise zum Herstellen ungesättigter Polyesterformmassen verwendeten Allyl- und vorzugsweise Vinylverbindungen in Frage. Vinylaromaten, wie Styrol, substituierte Styrole, wie p-Chlorstyrol oder Vinyltoluol, Ester der Acrylsäure und Methacrylsäure mit 1 bis 18 Kohlenstoffatome enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente C ist in der Formmasse in Mengen von 30 bis 150, vorzugsweise von 70 bis 120 Gew.-%, bezogen auf A, enthalten.

D) Als Verstärkungsfasern kommen in Frage anorganische und organische Fasern als Rovings oder flächige, gegebenenfalls daraus gewebte Gebilde, wie Matten, z.B. aus Glas, Kohlenstoff, Asbest, Cellulose und synthetische organische Fasern, wie Polyethylen, Polycarbonsäureester, Polycarbonate und Polyamide.

E) Geeignete Füllstoffe sind z.B. übliche feinpulverige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen.

F) Als Inhibitoren kommen phenolische Verbindungen, wie Hydrochinon, substituierte Hydrochinone, Brenzkatechin, tert.-Butylbrenzkatechin, kernsubstituierte Brenzkatechine, Chinone, wie Benzochinon, Naphthochinon, Chloranil, Nitrobenzole, wie m-Dinitrobenzol, Thiodiphenylamin, N-Nitrosoverbindungen,wie N-Nitrosodiphenylamin und Salze von N-Nitroso-N-cyclohexylhydroxylamin sowie deren Gemisch in Frage. Als zusätzliche Stabilisatoren eignen sich auch Salze des zweiwertigen Kupfers, beispielsweise Kupfernaphthenat oder -oktoat und quaternäre Ammoniumsalze.

G) Als Polymerisationsinitiatoren werden übliche, in der Wärme Radikale bildende organische Peroxide eingesetzt. Geeignete Initiatoren sind z.B.: Benzoylperoxid, tert.-Butylperoktoat, tert.-Butylperbenzoat, Diamylperoxid, Di-tert.-Dibutyl-peroxid und Perketale, wie z.B. Trimethylcyclohexanonperketal, sowie Percarbonate. Auch CC-labile Verbindungen und Azoverbindungen sind geeignet.

H) Als Eindickmittel werden Oxide oder Hydroxide des Lithiums, Magnesiums oder Calciums, Aluminiums oder Titans eingesetzt. Bevorzugt ist Magnesiumoxid.

I) Als weitere übliche Zusatzstoffe kommen in Frage:
- Gleitmittel, wie Zink-, Magnesium- und Calciumstearat sowie Polyalkylenetherwachse,
- Paraffine zur Verminderung der Monomerenverdunstung und zur Ausbildung einer klebfreien Oberfläche.
- Härtungsbeschleuniger, z.B. Oktoate oder Naphthenate von Kupfer, Blei, Calcium, Magnesium, Cer und insbesondere von Mangan und Kobalt; ferner aromatische Amine, wie Dimethylanilin und Diethylanilin.

3

- Eindickungsbeschleuniger, z.B. Ammoniumchloride, Phosphoniumchloride, Sulfoniumhalogenide, Wasser, Polyole oder Propandiol-1,2.

Die in den folgenden Beispielen genannten Teile und Prozente beziehen sich auf das Gewicht.

Beispiele

Ungesättigtes Polyesterharz

98 Teile Maleinsäureanhydrid, 61 Teile Propylenglykol und 44 Teile Dipropylenglykol werden unter Rühren und Darüberleiten von Stickstoff innerhalb von 2 Stunden auf 200° C erhitzt. Die Kondensation wird bis Säurezahl 30 fortgesetzt. 170 Teile des so erhaltenen ungesättigten Polyesters werden nach Zugabe von 0,026 Teilen Hydrochinon bei Temperaturen unter 120° C in 92 Teilen Styrol gelöst.

Komponente B (styrolische Lösung)

Die Herstellung der Komponente B erfolgt diskontinuierlich im 10 kg-Maßstab nach einem Masse-Suspensionsprozeß in einer Zwei-Kessel-Kaskade, bestehend aus den Kesseln A und B. Im Kessel A (20 l Fassungsvermögen) wird eine Lösung von 8,1 Teilen eines Polybutadiens mit der Viskositätszahl 350 ml/g und 0,5 Teilen eines medizinischen Weißöls in 91,4 Teilen Styrol vorgelegt. Nach Zugabe von 0,15 Gew.-% t-Dodecylmercaptan und 0,1 Gew.-% Dibenzoylperoxid, bezogen auf das Styrol, wird unter Rühren (Ankerrührer) die Temperatur des insgesamt 12 kg umfasenden Reaktionsansatzes innerhalb von 20 Minuten auf 86° C gebracht. Bei dieser Temperatur wird bei 150 Rührerumdrehungen pro Minute isotherm bis zu einem Umsatz von 35 %, bezogen auf das Styrol, polymerisiert.

Im Kessel B, einem ebenfalls mit einem Ankerrührer ausgestatteten Kessel mit einem Fassungsvermögen von 40 l, werden 18 000 g Wasser, 180 g eines Schutzkolloids auf Basis von Polyvinylpyrrolidon und 18 g Natriumphosphat gegeben und auf ca. 100° C gebracht.

Ist im Kessel A der Umsatz auf den geforderten Wert von 35 % gestiegen, werden 0,1 Teile Dicumylperoxid, bezogen auf den Gesamtansatz zugesetzt. Die Rührerdrehzahl im Kessel B wird dann auf 300/min eingestellt und der Inhalt von Kessel A mittels Stickstoff über ein Verbindungsrohr innerhalb von 15 Minuten in den Kessel B gedrückt.

In der derart hergestellten wäßrigen Suspension wird anschließend jeweils isotherm 6 h bei 130° C und 6 h bei 140° C bis zu einem Umsatz von mehr als 99 %, bezogen auf das Styrol, polymerisiert. Nach dieser Zeit wird der Kesselinhalt auf 30° C abgekühlt, abgelassen und gründlich mit Wasser gewaschen und anschließend 24 h im Vakuumtrockenschrank bei T = 60° C und p = 20 Torr getrocknet. Danach erfolgt eine Konfektionierung über einen Extruder (ZSK 30, Werner + Pfleiderer), um das Produkt in eine Granulatform zu bringen.

Der d50-Wert dieses Produktes liegt bei 1,1 Mikrometern und das Viskositätsmittel des Molekulargewichts der Hartmatrix bei 131 kg/mol.

100 Teile des so erhaltenen Polystyrols werden nach Zugabe von 0,03 Teilen Chinon in 203 Teilen Styrol gelöst.

Vergleich: Komponente B' (styrolische Lösung)

100 Teile schlagfestes Polystyrol (Standardqualität, d50-Wert = 2-3 Mikrometer, Viskositätsmittel der Hartmatrix = 175 kg/mol) werden nach Zugabe von 0,03 Teilen Chinon in 203 Teilen Styrol gelöst.

Untersuchung der Füllbarkeit

Ungesättigtes Polyesterharz und Komponente B bzw. B' werden gemischt. Steigende Mengen an CaCO₃ (Millicarb) werden eingerührt, und die Viskositäten bei Raumtemperatur werden gemessen.

| UP | B′ | B | CaCO₃ | Visk. (23 °C) (mPas) |
|----|----|----|----|----|
| 60 | 40 | - | 33 | 1.840 |
| 60 | - | 40 | 33 | 1.895 |
| 60 | 40 | - | 80 | 5.265 |
| 60 | - | 40 | 80 | 4.833 |
| 60 | 40 | - | 100 | 9.200 |
| 60 | - | 40 | 100 | 7.695 |
| 60 | 40 | - | 150 | 39.100 |
| 60 | - | 40 | 150 | 32.360 |
| 60 | 40 | - | 200 | 291.720 |
| 60 | - | 40 | 200 | 212.160 |

**Ansprüche**

Härtbare Formmasse aus:

A) einem ungesättigten Polyester

B) 5 bis 50 Gew.-%, bezogen auf A, eines schlagfest modifizierten Polystyrols,

C) 30 bis 150 Gew.-%, bezogen auf A, einer mit A copolymerisierbaren Verbindung,

D) 0-60 Gew.-%, bezogen auf A + B + C, eines faserförmigen Verstärkungsmaterials,

E) 0-300 Gew.-%, bezogen auf A + B + C, eines Füllstoffs,

F) 0,005-0,5 Gew.-%, bezogen auf A + B + C, eines Inhibitors,

G) 0,1-5 Gew.-%, bezogen auf A + B + C, eines Initiators,

H) 0,2-5 Gew.-%, bezogen auf A + B + C, eines Eindickmittels,

I) gegebenenfalls weiteren üblichen Zusatzstoffen,
dadurch gekennzeichnet, daß die Komponente B aus einer Hart- und einer Weichphase auf Basis eines Butadienpolymerisats besteht, wobei der Anteil der Weichphase, bezogen auf die Summe aus Hart- und Weichphase, zwischen 27 und 33 Gew.-% liegt, die Weichphase gleichmäßig in der Hartmatrix in Form diskreter Teilchen dispergiert ist, wobei der mittlere Teilchendurchmesser (Volumenmittel) - d50-Wert - der Weichphase zwischen 0,5 und 1,5 Mikrometer beträgt.

5